# EUROPÄISCHE PATENTSCHRIFT

(11) **EP 1 013 014 B1**
(45) Veröffentlichungstag und Bekanntmachung des Hinweises auf die Patenterteilung: **26.03.2003**
(21) Anmeldenummer: 97946728.9
(22) Anmeldetag: 10.10.1997
(51) Int. Cl.: H04B 17/00

(54) **PRÜFVERFAHREN FÜR EINE MOBILE EMPFANGSVORRICHTUNG**
TEST METHOD FOR A MOBILE RECEIVER
METHODE D'ESSAI POUR UN RECEPTEUR MOBILE

(30) Priorität: 11.10.1996 DE 19643578
(43) Veröffentlichungstag der Anmeldung: 28.06.2000
(73) Patentinhaber: SIEMENS AKTIENGESELLSCHAFT, 80333 München (DE)
(72) Erfinder: ERNST, Horst, D-38118 Braunschweig (DE); BRAUNER, Peter, D-38300 Wolfenbüttel (DE); LODER, Max, CH-8906 Bonstetten (CH)
(86) Internationale Anmeldenummer: DE9702368
(87) Internationale Veröffentlichungsnummer: WO98017019

(56) Entgegenhaltungen:
- EP-A- 0 690 593
- WO-A-94/29976
- US-A- 4 972 511

## Beschreibung

Die Erfindung bezieht sich auf ein Prüfverfahren für eine mobile Empfangsvorrichtung mit einem Empfänger innerhalb eines unterbrochen betriebenen Übertragungssystems, insbesondere für Steuerungsinformationen im Verkehrwesen. Sie bezieht sich weiter auf eine Empfangsvorrichtung mit einem solchen mobilen Empfänger für Informationen eines stationären Sendersystems.

Ein Übertragungssystem mit einer mobilen, kontinuierlich betriebenen Empfangsvorrichtung und einer Anzahl von lokalen, stationären Sendeeinrichtungen wird üblicherweise betrieben, indem für begrenzte Zeiträume Informationsdaten dann empfangen werden, wenn sich der Empfänger im Wirkbereich eines Senders befindet. Dieses Verhalten wird häufig zur gezielten Informationsübertragung an ortsabhängig gültige Empfänger genutzt, wobei der oder jeder Sender in seiner allgemeinsten Funktion eine elektronische Ortsmarke darstellt. Ein solches System mit einem quasi unterbrochen betriebenen Übertragungskanal eignet sich besonders zur Übertragung von Steuerungsinformationen im Verkehrswesen mit z. B. Schienenfahrzeugen.

Aufgrund eines nur sporadisch am Empfänger verfügbaren Sendersignals oder Empfangssignals ergibt sich folglich das grundsätzliche Problem einer Erkennung der Empfangsbereitschaft des Empfangskanals innerhalb des Übertragungssystems. In Abhängigkeit von der Natur der übertragenen Daten oder Informationen kann ein Nicht-Empfangen eines Senders betriebshemmende Folgen haben. Dies gilt insbesondere für den Fall, daß ein lokaler Sender vom mobilen Empfänger unerkannt passiert wird. Häufige Ursache eines solchen Fehlers ist eine Veränderung der die Empfindlichkeit repräsentierenden Parameter des Empfangskanals oder ein Ausfall einer seiner Komponenten. Eine Veränderung der Empfindlichkeit des Empfängers oder Empfangskanals kann zu dem Phänomen des sogenannten Übersprechens führen, wobei auch Informationen von solchen Sendern empfangen werden können, die außerhalb des aktuellen Wirkbereichs des Empfängers stehen. Ein weiteres bei höchsten Anforderungen an den Übertragungskanal zu beherrschendes Phänomen ist die sogenannte Erinnerungsfreiheit, die eine verspätete Weitergabe gespeicherter Informationen an eine dem Empfänger nachgeschaltete Auswertelogik ausschließt.

Diese Fehlerbetrachtungen gelten auch bei einem Übertragungssystem mit einer Energieübertragung vom Empfänger auf den Sender. Dabei wird die zum Betrieb des oder jedes Senders benötigte Energie von der Empfangsvorrichtung abgestrahlt, so daß die Empfangsvorrichtung Interrogator mit einem Empfänger und einem Abfrager als Komponenten ist. Der oder jeder Sender ist dann entsprechend ein sogenannter Transponder mit dem eigentlichen Sender und einem Energieempfänger als Komponenten. Allerdings liefert das Übertragungssystem auch für die Energieübertragung bislang systembedingt keine zuverlässigen Informationen darüber, ob der Interrogator ein für den zuverlässigen Betrieb des Transponders noch ausreichendes Energiesignal abgibt.

Aus der EP 0 690 593 A2 ist eine Mobilfunkeinrichtung mit einer Sende/Empfangseinrichtung bekannt, bei der der Sender zu diskreten Zeitpunkten auf den eigenen Empfänger speist; durch Überwachen der dabei vom Empfänger aufgenommenen Signale soll das Funktionsverhalten der Mobilfunkeinrichtung überwacht werden.

Aus der WO 94/29976 ist ein Prüfverfahren für einen aus Sender und Empfänger bestehenden Übertragungsbaustein bekannt, bei dem zu ganz bestimmten, von einer Steuerstelle aus festlegbaren Zeitpunkten eine direkte Übermittlung von Testsignalen vom Sender auf den Empfänger vorgesehen ist. Auch hier geht es um die Überprüfung der Funktionsfähigkeit des Übertragungsbausteins.

Die aus den vorgenannten Schriften bekannten Überwachungsprinzipen lassen sich nicht ohne weiteres auf mobile Empfangseinrichtungen anwenden, die über keine mit anderen Teilnehmern in Verbindung stehende Sendeeinrichtung verfügen; eine Rückkopplung von Sendeeinrichtungen auf den eigenen Empfangskanal ist dort nicht möglich. Darüber hinaus werden durch den Prüfvorgang auch nicht alle für den Datenempfang erforderlichen Teil der Empfangsvorrichtungen geprüft sondern nur solche, die innerhalb der jeweils geschalteten Überwachungsbrücke liegen; so ist z. B. das Abreißen der Empfangsantenne bzw. der entsprechenden Eingangsleitung der Empfangsvorrichtung nicht erkennbar.

Eine mögliche Lösung dieser Probleme ist eine logische Verkettung der Sender oder Transponder in derjenigen Reihenfolge, in der diese von der mobilen Empfangseinrichtung, d.h. vom Interrogator, passiert werden. Dabei würde ein Sender oder Transponder in seinem Informationsumfang auch einen Hinweis auf den nachfolgenden Sender übermitteln, insbesondere hinsichtlich des Abstandes, innerhalb dessen dieser passiert wird. Eine dem Interrogator zugeordnete Auswertelogik könnte dann eine Störung diagnostizieren und eine entsprechende Rückfallreaktion einleiten, wenn die Signale dieses Senders in der entsprechenden Entfernung nicht vom Interrogator empfangen werden. Ebenso könnte ein Übersprechen diagnostiziert werden, wenn Signale eines nicht angekündigten Senders empfangen werden. Mit dem gleichen Prinzip kann auch die Erinnerungsfreiheit überprüft werden. Nachteilig bei dieser Lösung ist jedoch die geringe Flexibilität, da Streckenabläufe nur mit erheblichem Aufwand geändert oder zusätzliche Sender/Transponder in das Übertragungssystem eingefügt werden können. Darüber hinaus ist im Fehlerfall eine Diagnose nur eingeschränkt möglich, da mit diesem Verfahren einer logischen Verkettung der Sender eine Differenzierung zwischen einem fehlerhaften Transponder und einem fehlerhaften Interrogator nicht möglich ist.

Der Erfindung liegt daher die Aufgabe zu Grunde, ein Prüfverfahren für den Empfänger einer mobilen Empfangseinrichtung innerhalb eines Übertragungssystems anzugeben, das eine frühzeitige und zuverlässige Fehlererkennung innerhalb des Übertragungssystems, insbesondere auf der Empfängerseite des Übertragungskanals, ermöglicht. Außerdem soll eine mittels dieses Prüfverfahrens überwachbare Empfangsvorrichtung angegeben werden.

Bezüglich des Prüfverfahrens wird die genannte Aufgabe erfindungsgemäß gelöst durch die Merkmale des Anspruchs 1. Dabei erfolgt ein ununterbrochener On-line Test der Empfangskomponente eines unterbrochen betriebenen Übertragunskanals, indem die Empfangsbereitschaft des Empfängers mittels eines von diesem detektierbaren kontinuierlichen Testsignals überwacht wird.

Die Erfindung geht dabei von der Überlegung aus, daß eine sichere Erkennung der Verfügbarkeit des Interrogators oder Empfängers und damit eine zuverlässige Überwachung der Empfangsbereitschaft erreicht werden kann, wenn auch solche Fehler erkannt werden, die zwischen einem diskreten Prüfzeitpunkt und dem Zeitpunkt der folgenden Passage eines Senders oder Transponders auftreten. Derartige Fehler könnten durch eine kontinuierliche Prüfung erkannt werden. Eine kontinuierliche Prüfung wiederum kann erreicht werden, wenn der Interrogator oder Empfänger ununterbrochen, d.h. auch zwischen den Wirkungsbereichen zweier Sender ein Signal empfängt. Dies wiederum wird ermöglicht durch ein Testsignal, das lediglich bei Auftreten eines Empfangssignals unterbrochen oder ausgeblendet wird.

Dazu wird zweckmäßigerweise ein Testsignal verwendet, das direkt an der Ansprechschwelle des Empfängers im Interrogator liegt. Eine Verschlechterung der Empfangsbereitschaft des Empfängers wird demzufolge bei Unterschreiten der Ansprechschwelle sofort erkannt.

Auch kann die Abstrahlung eines Energiesignals vom Interrogator an den Transponder überwacht werden, indem ein das Testsignal erzeugender Testtransponder mit diesem Energiesignal betrieben wird, wobei der Betrieb wiederum direkt an der Ansprechschwelle des Testtransponders liegt. Ein Absenken des abgestrahlten Energiesignals führt dann zu einem dektierbaren Ausfall des Testtransponders und somit zu Unterbrechung des Testsignals.

Bei Eindringen des mobilen Empfängers in den Wirkbereich eines regulären Senders oder Transponders ergibt sich eine Überlagerung des Testsignals mit dem Empfangssignal und somit ein erhöhter Empfangspegel, ein gestörter Informationsinhalt oder ein Schwebungseffekt. Diese Effekte, d.h. sowohl ein Pegelanstieg oder eine Schwebung als auch eine Informationsstörung, können als Kriterium herangezogen werden, um den Testtransponder und damit das Testsignal abzuschalten und einen ungestörten Empfang des regulären Transponders zu ermöglichen. Nach einer Passage dieses regulären Transponders wird ein Unterschreiten der Ansprechschwelle erkannt und der Testtransponder erneut eingeschaltet oder eingeblendet, so daß durch das dadurch erzeugte kontinuierliche Testsignal die Überwachung wieder aufgenommen wird.

Um auch geringfügige und langsame Veränderungen des Testsignals zu erkennen, werden zweckmäßigerweise zwei Testsignale erzeugt. Dabei werden beide Testsignale wiederum nahe der Ansprechschwelle des Empfängers erzeugt und abwechselnd betrieben. Durch Kalibrieren der Empfangsschwelle des Empfängers beim Mittelwert der beiden Testsignale wird eine einen fehlerhaften Testtransponder anzeigende Meldung erzeugt, wenn die Differenz der beiden Testsignale einen bestimmten Wert überschreitet. Durch diese Maßnahme ist insbesondere gewährleistet, daß die Empfindlichkeit des Empfängers stets einen vorgegebenen Wert einnimmt. Somit werden einerseits entlang einer Strecke passierte stationäre Transponder zuverlässig empfangen. Andererseits ist ein unerwünschter Empfang eines abseits des Fahrweges angeordneten Transponders ausgeschlossen.

Die Erinnerungsfreiheit der Empfangseinrichtung wird zweckmäßigerweise dadurch gewährleistet, daß die mit dem kontinuierlichen Testsignal übertragene Testinformation jeweils alle in der Empfängereinrichtung verfügbaren Speicherbereiche ausfüllt. Eine dem Empfänger oder Interrogator zugeordnete Auswertelogik wertet dann bei jedem Informationswechsel, d.h. sowohl bei einem Wechsel von einem Testtransponder zum anderen Testtransponder als auch beim Erreichen und Verlassen des Wirkbereichs eines regulären Transponders, den gesamten Speicherbereich aus.

Bezüglich der Empfangsvorrichtung wird die genannte Aufgabe erfindungsgemäß gelöst durch die Merkmale des Anspruchs 9. Vorteilhafte Ausgestaltungen der Empfangsvorrichtung sind Gegenstand der Unteransprüchen 10 bis 14.

Der Empfänger der mobilen Empfangsvorrichtung für Informationen eines stationären Sendersystems ist zweckmäßigerweise ein Interrogator mit dem eigentlichen Empfängerbaustein und einem Abfragebaustein, wobei beide Bausteine mit einer Antenne der Empfangsvorrichtung verbunden sind. Der oder jeder Testsender ist dann zweckmäßigerweise zum Empfangen eines Energiesignals vom Interrogator ausgebildet und somit Testtransponder. Vorzugsweise sind einer Empfangsvorrichtung zwei Testtransponder zugeordnet, die von einer mit dem Empfängerbaustein verbundenen Auswertelogik ein- oder ausgeblendet werden können.

Die mit der Erfindung erzielten Vorteile bestehen insbesondere darin, daß durch einen ununterbrochenen On-line Test der Empfangskomponenten eines unterbrochen betriebenen Übertragungskanals mittels eines kontinuierlichen Testsignals eine zuverlässige Prüfung des Empfängers einer mobilen Empfangsvorrichtung innerhalb eines Übertragungssystems mit Stationären Sendern gewährleistet ist. Eine entsprechende Empfangsvorrichtung weist dazu mindestens einen, vorzugsweise zwei, Testsender zur Erzeugung des Testsignals auf.

Bei einem Übertragungssystem mit einem Interrogator als Empfänger und einem Transponder sowohl als mitgeführter Testsender als auch als lokaler Sender innerhalb des stationären Sendersystems wird die Übertragung eines Energiesignals vom Interrogator auf den regulären Transponder überwacht, indem auch der Testtransponder mit diesem Energiesignal betrieben wird. In besonders vorteilhafter Ausgestaltung erfolgt sowohl die Überprüfung der Empfangsbereitschaft als auch die Überwachung des Energiesignals dadurch, daß einerseits das Testsignal die Ansprechschwelle des Empfängers bildet, und daß andererseits das Energiesignal die Ansprechschwelle des Testtransponders darstellt.

Ein Ausführungsbeispiel der Erfindung wird anhand einer Zeichnung näher erläutert. Darin zeigen:
- FIG 1: ein Übertragungssystem mit einer mobilen Empfangsvorrichtung und stationären Sendern und
- FIG 2: eine Empfangsvorrichtung mit einem Interrogator und zwei Testtranspondern.

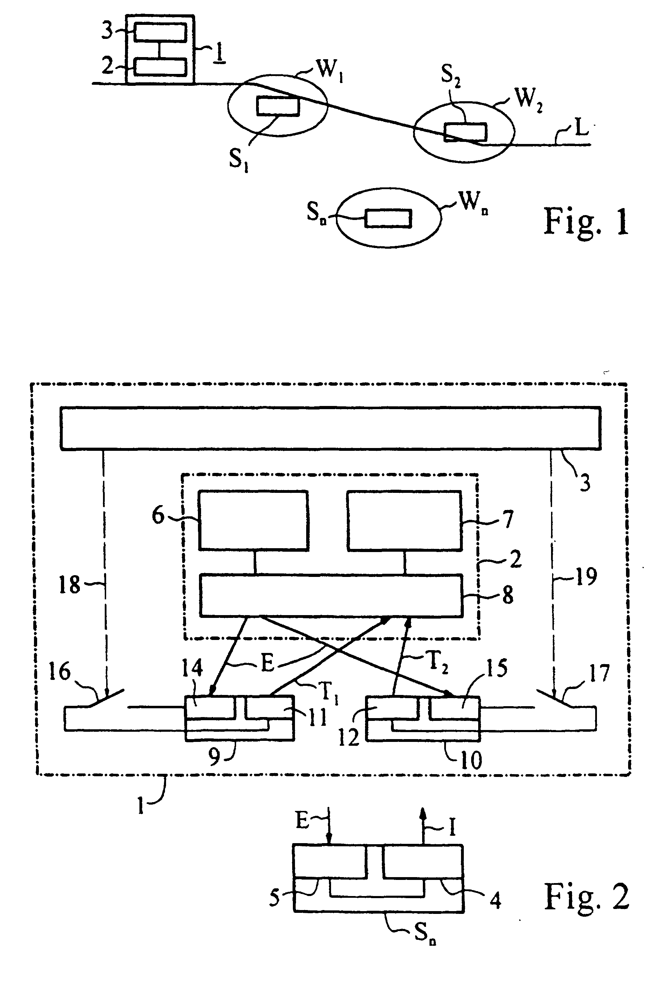

Ein Übertragungssystem gemäß FIG 1 dient beispielsweise zur Übertragung von Steuerungsinformationen im Verkehrswesen mit direkter Kommunikation zwischen einem wegseitigen Signalsystem und einem Schienen- oder Straßenfahrzeug. Das wegseitige Signal- oder Sendersystem umfaßt eine Anzahl von Sendern S_{1...n}. Eine mobile, d.h. mit dem Fahrzeug bewegte Empfangsvorrichtung 1 umfaßt einen kontinuierlich betriebenen Empfänger 2 mit nachgeschalteter Auswertelogik .

Unter der Voraussetzung, daß sich die Empfangsvorrichtung 1 längs einer Linie L bewegt, und daß ein jedem Sender Sₙ zugeordneter Wirkbereich Wₙ jeweils räumlich begrenzt ist, werden jeweils nur für begrenzte Zeiträume von den Sendern S_{1...n} abgegebene Steuerungsinformationen in Form von Signaldaten von der Empfangsvorrichtung 1 empfangen. Dieser Datenempfang erfolgt jeweils nur dann, wenn die Empfangsvorrichtung 1 im Wirkbereich Wₙ eines Senders Sₙ ist, d.h. wenn die Linie L den Wirkbereich Wₙ schneidet. Dadurch werden gezielt Informationen nur an solche mobilen Einheiten übertragen, deren Empfang lediglich an dem entsprechenden Ort Gültigkeit hat. Die Sender S_{1...n} bilden somit elektronische Ortsmarken, an denen an eine bestimmte mobile Empfangseinrichtung 1 zu einer bestimmten Zeit Steuerungsinformationen übertragen werden.

Wie in FIG 2 schematisch dargestellt, ist der oder jeder Sender Sₙ ein Transponder mit einem Senderbaustein 4 und einem Energieempfangsbaustein 5 für ein Energiesignal E. Dieses wird von der entsprechend als Interrogator aufgebauten Empfangsvorrichtung 1 an den Transponder Sₙ abgestrahlt. Den Interrogator bildet innerhalb der Empfangsvorrichtung 1 der Empfänger 2 mit einem Abfragebaustein 6 und mit einem Empfangsbaustein 7. Während lediglich der Empfangsbaustein 7 mit der Auswertelogik 3 der Empfangsvorrichtung 1 verbunden ist, sind sowohl der Abfragebaustein 6 als auch der Empfangsbaustein 7 mit einer Antenne 8 des Empfängers 2 verbunden. Ein vom Transponder Sₙ abgestrahltes Sendersignal I mit Informationsdaten für die entsprechende mobile Einheit wird innerhalb des Wirkbereichs Wₙ des Transponders Sₙ von der Antenne 8 empfangen und über den Empfangsbaustein 7 der Auswertelogik 3 der Empfangsvorrichtung 1 zugeführt.

Zur Überprüfung der Empfangsbereitschaft des aus dem Transponder Sₙ und dem Interrogator 2 gebildeten Übertragungskanals wird ein kontinuierliches Testsignal T_{1,2} gebildet, das über die Antenne 8 dem Abfragebaustein 6 und dem Empfangsbaustein 7 zugeführt wird. Dazu sind im Ausführungsbeispiel zwei Testtransponder 9,10 vorgesehen, deren jeweiliger Sendebaustein 11,12 das kontinuierliche Testsignal T₁ bzw. T₂ aussenden. Gleichzeitig empfangen entsprechende Energieempfangsbausteine 14 und 15 des Testtransponders 9 bzw. 10 dasselbe Energiesignal E, das auch vom Energieempfangsbaustein 5 des Stationären Transponders Sₙ empfangen wird. Die Empfangsvorrichtung 1 führt dabei den oder jeden Testtransponder 9,10 nahe ihrer Antenne 8 mit sich.

Das von den Testtranspondern 9,10 abgegebene Testsignal T₁ bzw. T₂ ist derart gewählt, daß es hinsichtlich seines Pegels direkt an der Ansprechschwelle des Empfängerbausteins 7 liegt, so daß dieser gerade anspricht und aktiv ist. Ebenso wird die Abstrahlung des Energiesignals E überwacht, indem die Testtransponder 9,10 durch dieses Energiesignal E direkt an deren Ansprechschwelle betrieben werden. Eine Verschlechterung der Empfangsbereitschaft des Empfängerbausteins 7 wird somit dadurch erkannt und von der Auswertelogik 3 diagnostiziert, daß die Ansprechschwelle des Empfangsbausteins 7 unterschritten wird. Analog wird ein Absenken des abgestrahlten Energiesignals E durch Unterschreiten der Ansprechschwelle der Testtransponder 9,10 erkannt und detektiert.

Erreicht die mobile Empfangsvorrichtung 1 den Wirkbereich Wₙ des Transponders Sₙ so ergibt sich eine Überlagerung des kontinuierlichen Testsignals T_{1,2} und des regulären Sendersignals I des Transponders Sₙ. Ein dadurch bedingter erhöhter Empfangspegel wird innerhalb der Auswertelogik 3 als Kriterium zum Abschalten der Testtransponder 9,10 und damit zum Ausblenden des Testsignals T_{1,2} herangezogen. Dies ist durch auf entsprechende Schaltsymbole 16,17 der Testtransponder 9,10 gerichtete Wirkpfeile 18 bzw. 19 angedeutet. Durch Überlagerung des Testsignals T_{1,2} und des Sendersignals I können auch Schwebungseffekte auftreten oder gestörte Informationsinhalte diagnostiziert werden, wobei diese Effekte ebenfalls als Kriterium zum Abschalten oder Ausblenden der Testtransponder herangezogen werden.

Nach Abschalten der Testtransponder 9,10 und der damit verbundenen Ausblendung der kontinuierlichen Testsignale T₁,T₂ ist dann ein ungestörter Empfang des Sendersignals I des regulären Transponders Sₙ gewährleistet. Ein Passieren des Transponders Sₙ wird demzufolge durch Unterschreiten der Ansprechschwelle des Empfangsbausteins 7 erkannt. Daraufhin wird der oder jeder Testtransponder 9,10 erneut eingeschaltet und somit die kontinuierliche Überwachung wieder aufgenommen, indem das Testsignal T_{1,2} das Sendersignal I quasi unterbrechungsfrei ablöst.

Eine Erhöhung der Zuverlässigkeit der Empfangsvorrichtung 1 kann dadurch erzielt werden, daß die beiden Testtransponder 9,10 abwechselnd durch wechselseitiges Schalten betrieben werden. Dadurch kann vorteilhafterweise eine allmähliche Veränderung der Empfangseigenschaften des Empfängerbausteins 7 und/oder der Eigenschaften des jeweiligen Testtransponders 9,10 erkannt werden. Dazu kalibriert der Empfangsbaustein 7 seine Empfangs- oder Ansprechschwelle am Mittelwert der beiden empfangenen Testsignale T₁, T₂. Bei einer vorgegebenen Differenzabweichung der beiden Testsignale T₁ ,T₂ wird eine den fehlerhaften Testtransponder 9,10 anzeigende Fehlermeldung erzeugt. Dadurch ist gewährleistet, daß die Empfindlichkeit des Empfängerbausteins 7 stets einen vorgegebenen Wert einnimmt. Dabei werden die an der Fahrstrecke entlang der Linie L passierten Transponder Sₙ zuverlässig empfangen, während Transponder Sₙ außerhalb deren Wirkbereichs Wₙ nicht empfangen werden.

## Patentansprüche

1. Prüfverfahren für eine mobile Empfangsvorrichtung mit einem Empfänger innerhalb eines unterbrochen betriebenen Übertragungssystems, insbesondere für Steuerunginformationen im Verkehrswesen, wobei zur Überwachung der Empfangsbereitschaft im Empfänger (2) ein von diesem detektierbares, von mindestens einem Testsender (9,10) erzeugtes kontinuierliches Testsignal (T_{1,2}) erzeugt wird.

2. Prüfverfahren nach Anspruch 1, wobei das Testsignal (T_{1,2}) die Ansprechschwelle des Empfängers (2) bildet.

3. Prüfverfahren nach Anspruch 1 oder 2, wobei bei Empfangen eines Sendersignals (I) das Testsignal (T_{1,2}) ausgeblendet wird.

4. Prüfverfahren nach Anspruch 3, wobei als Kriterium für eine erneute Einblendung des Testsignals (T_{1,2}) ein Pegelabfall des Sendersignals (I) herangezogen wird.

5. Prüfverfahren nach einem der Ansprüche 1 bis 4, bei dem die Empfangsbereitschaft durch wechselseitiges Schalten von zwei Testsignalen (T₁, T₂) überwacht wird.

6. Prüfverfahren nach Anspruch 5, wobei durch Mittelwertbildung der Signalpegel der Testsignale (T₁, T₂) eine Ansprechschwelle für den Empfänger (2) erzeugt wird.

7. Prüfverfahren nach Anspruch 5 oder 6, wobei eine Pegelabweichung der Testsignale (T₁, T₂) zur Fehlerdiagnose herangezogen wird.

8. Prüfverfahren nach einem der Ansprüche 1 bis 7, bei dem zur Überwachung eines vom Empfänger (2) gesendeten Energiesignals (E) dieses an der Ansprechschwelle eines das Testsignal (T_{1,2}) erzeugenden Testsenders (9, 10) liegt.

9. Mobile Empfangsvorrichtung mit einem Empfänger (2) für Informationen eines stationären Sendersystems (Sₙ), insbesondere für Steuerungsinformationen im Verkehrswesen, wobei zur Diagnose der Empfangsbereitschaft des Empfängers (2) mindestens ein Testsender (9, 10) in der mobilen Empfangsvorrichtung (1) vorgesehen ist.

10. Mobile Empfangsvorrichtung nach Anspruch 9, wobei der oder jeder Testsender (9, 10) zum Empfangen eines Energiesignals (E) vom Empfänger (2) ausgebildet ist.

11. Mobile Empfangsvorrichtung nach Anspruch 9 oder 10, bei der dem Empfänger (2) eine Auswertelogik (3) nachgeschaltet ist.

12. Mobile Empfangsvorrichtung nach einem der Ansprüche 9 bis 11, wobei der Empfänger (2) ein Interrogator mit einem Empfangsbaustein (7) und mit einem Abfragebaustein (6) ist.

13. Mobile Empfangsvorrichtung nach einem der Ansprüche 9 bis 12, wobei der oder jeder Sender (Sₙ) und der oder jeder Testsender (9,10) ein Transponder mit einem Senderbaustein (4;11,12) und mit einem Energieempfangsbaustein (5;14,15) ist.

14. Mobile Empfangsvorrichtung nach einem der Ansprüche 9 bis 13, wobei der oder jeder Testsender (9,10) in der Nähe einer mit dem Empfänger (2) verbundenen Antenne (8) angeordnet ist.

## Claims

1. Test method for a mobile reception apparatus having a receiver within a discontinuously operated transmission system, particularly for control information in the transport field, where reception standby in the receiver (2) is monitored by generating a continuous test signal (T_{1,2}) which can be detected by the receiver and is generated by at least one test transmitter (9, 10).

2. Test method according to Claim 1, where the test signal (T_{1,2}) forms the response threshold for the receiver (2).

3. Test method according to Claim 1 or 2, where the test signal (T_{1,2}) is masked out when a transmitter signal (I) is being received.

4. Test method according to Claim 3, where the criterion used for unmasking the test signal (T_{1,2}) again is a level drop in the transmitter signal (I).

5. Test method according to one of Claims 1 to 4, in which reception standby is monitored by means of alternate connection of two test signals (T₁, T₂).

6. Test method according to Claim 5, where averaging of the signal levels of the test signals (T₁, T₂) is used to produce a response threshold for the receiver (2).

7. Test method according to Claim 5 or 6, where a level discrepancy in the test signals (T₁, T₂) is used for error diagnosis.

8. Test method according to one of Claims 1 to 7, in which an energy signal (E) transmitted by the receiver (2) is monitored by virtue of said energy signal being at the response threshold of a test transmitter (9, 10) generating the test signal (T_{1,2}).

9. Mobile reception apparatus having a receiver (2) for information from a fixed transmitter system (Sₙ), particularly for control information in the transport field, where reception standby in the receiver (2) is diagnosed by virtue of at least one test transmitter (9, 10) being provided in the mobile reception apparatus (1).

10. Mobile reception apparatus according to Claim 9, where the or each test transmitter (9, 10) is designed to receive an energy signal (E) from the receiver (2).

11. Mobile reception apparatus according to Claim 9 or 10, in which the receiver (2) has an evaluation logic unit (3) connected downstream of it.

12. Mobile reception apparatus according to one of Claims 9 to 11, where the receiver (2) is an interrogator having a reception module (7) and having an interrogation module (6).

13. Mobile reception apparatus according to one of Claims 9 to 12, where the or each transmitter (Sₙ) and the or each test transmitter (9, 10) is a transponder having a transmitter module (4; 11, 12) and having an energy reception module (5; 14, 15).

14. Mobile reception apparatus according to one of Claims 9 to 13, where the or each test transmitter (9, 10) is arranged in the vicinity of an antenna (8) connected to the receiver (2).

## Revendications

1. Procédé de test pour un dispositif de réception mobile comportant un récepteur à l'intérieur d'un système de transmission fonctionnant avec interruptions, notamment pour des informations de commande dans la gestion de trafic, dans lequel on produit pour le contrôle de la disponibilité en réception dans le récepteur (2) un signal de test (T_{1,2}) continu, détectable par ce récepteur et produit par au moins un émetteur de test (9, 10).

2. Procédé de test selon la revendication 1, dans lequel le signal de test (T_{1,2}) forme le seuil de réponse du récepteur (2).

3. Procédé de test selon la revendication 1 ou 2, dans lequel on supprime le signal de test (T_{1,2}) lors de la réception d'un signal d'émetteur (I).

4. Procédé de test selon la revendication 3, dans lequel on exploite comme critère pour une nouvelle insertion du signal de test (T_{1,2}) une chute de niveau du signal d'émetteur (I).

5. Procédé de test selon l'une des revendications 1 à 4, dans lequel on contrôle la disponibilité en réception en commutant en alternance deux signaux de test (T₁, T₂).

6. Procédé de test selon la revendication 5, dans lequel on produit un seuil de réponse pour le récepteur (2) en formant la valeur moyenne des niveaux des signaux de test (T₁, T₂).

7. Procédé de test selon la revendication 5 ou 6, dans lequel on exploite un écart de niveau des signaux de test (T₁, T₂) pour diagnostiquer des erreurs.

8. Procédé de test selon l'une des revendications 1 à 7, dans lequel, pour le contrôle d'un signal d'énergie (E) envoyé par le récepteur (2), celui-ci se trouve au niveau du seuil de réponse d'un émetteur de test (9, 10) produisant le signal de test (T_{1,2}).

9. Dispositif de réception mobile comportant un récepteur (2) pour des informations d'un système émetteur stationnaire (Sₙ), notamment pour des informations de commande dans la gestion de trafic, dans lequel il est prévu pour le diagnostic de la disponibilité en réception du récepteur (2) au moins un émetteur de test (9, 10) dans le dispositif de réception mobile (1).

10. Dispositif de réception mobile selon la revendication 9, dans lequel le ou chaque émetteur de test (9, 10) est conçu pour la réception d'un signal d'énergie (E) du récepteur (2).

11. Dispositif de réception mobile selon la revendication 9 ou 10, dans lequel une logique d'évaluation (3) est branchée du côté aval du récepteur (2).

12. Dispositif de réception mobile selon l'une des revendications 9 à 11, dans lequel le récepteur (2) est un interrogateur avec un composant de réception (7) et avec un composant d'interrogation (6).

13. Dispositif de réception mobile selon l'une des revendications 9 à 12, dans lequel le ou chaque émetteur (Sₙ) et le ou chaque émetteur de test (9, 10) est un transpondeur avec un composant d'émission (4 ; 11, 12) et avec un composant de réception d'énergie (5 ; 14, 15).

14. Dispositif de réception mobile selon l'une des revendications 9 à 13, dans lequel le ou chaque émetteur de test (9, 10) est disposé à proximité d'une antenne (8) reliée au récepteur (2).
